# EUROPÄISCHE PATENTSCHRIFT

(11) **EP 1 078 827 B1**
(45) Veröffentlichungstag und Bekanntmachung des Hinweises auf die Patenterteilung: **02.02.2005**
(21) Anmeldenummer: 00117819.3
(22) Anmeldetag: 18.08.2000
(51) Int. Cl.: B60R 22/46

(54) **Vorrichtung zum Straffen eines auf eine Gurtspule aufwickelbaren Sicherheitsgurtes**
Device for tensioning a seat belt on a retractor
Dispositif pour tendre une ceinture de sécurité sur un enrouleur

(30) Priorität: 20.08.1999 DE 19939499
(43) Veröffentlichungstag der Anmeldung: 28.02.2001
(73) Patentinhaber: KEY SAFETY SYSTEMS, INC., Sterling Heights, Michigan 48314 (US)
(72) Erfinder: Specht, Martin, Dipl.-Ing. (FH), 82340 Feldafing (DE); Gassner, Stephan, 85259 Wiedenzhausen (DE); Junker, Klaus, 81667 München (DE); Knych, Andreas, 81375 München (DE)
(74) Vertreter: Nöth, Heinz, Dipl.-Phys.

(56) Entgegenhaltungen:
- EP-A- 0 980 799
- DE-U- 29 520 307
- DE-U- 29 812 801
- US-A- 3 871 470
- US-A- 3 999 780

## Beschreibung

Die Erfindung betrifft eine Vorrichtung zum Straffen eines auf eine Gurtspule aufwickelbaren Sicherheitsgurtes.

Aus EP-A-0 980 799, zitiert gemäss Artikel 54(3) EPÜ, ist eine.

Vorrichtung zum Straffen eines auf eine Gurtspule aufwickelbaren Sicherheitsgurtes mit einem in einem Führungsrohr linear antreibbaren Kolben, dessen Antriebsbewegung zum Straffen des Sicherheitsgurtes in eine Drehung der Gurtspule umgesetzt wird, wobei im Kolbeninnern ein Arbeitsdruck für den Kolbenantrieb herrscht und am Kolben eine bei Überdruck geöffnete Schwachstelle für einen Druckausgleich vorgesehen ist, wobei die Schwachstelle in einer entlang dem Führungsrohr bewegbaren Seitenwand des Kolbens als Wandschwachstelle ausgebildet ist und daß zwischen dem Führungsrohr und der Seitenwand des Kolbens ein nach außen geführter Gaskanal gebildet ist, in welchem die Wandschwachstelle liegt, bekannt.

Aufgabe der Erfindung ist es eine Vorrichtung der eingangsgenannten Art zu schaffen, bei welcher mit einfachen Mitteln die Wandschwachstelle für den Überdruckabbau im Kolben erreicht wird.

Diese Aufgabe wird durch das Kennzeichen des Patentanspruches 1 gelöst.

Die Wandschwachstelle der Seitenwand des Kolben ist in einfacher Weise als Scheibe ausgebildet, die in ein Durchgangsloch der Seitenwand dicht eingesetzt wird. Das Durchgangsloch der Kolbenseitenwand kann bei der Kolbenherstellung als Druckgußteil gebildet werden. Das Durchgangsloch kann gestuft oder durchgehend ausgebildet sein. Gleichzeitig mit dem Durchgangsloch kann in die Seitenwand des Kolbens ein Gaskanal eingeformt werden, welcher den Druckausgleich nach außen hin gewährleistet.

Die Scheibe kann als Scherblech ausgebildet sein, welches durch eine beim Überdruck entstehende Scherwirkung aus ihrem Bei der Erfindung befindet sich die Stelle, über welche der Druckausgleich vom Kolbeninnern nach außen hin erfolgt, in der Seitenwand des Kolbens. Diese Seitenwand liegt der Führungswand des Führungsrohres unmittelbar gegenüber. Hierdurch wird ein offener Flammendurchgang nach außen hin vermieden. Der Flammendurchgang trifft unmittelbar auf die Seitenwand des Führungsrohres. Es entstehen allenfalls Schmauchspuren an der Seitenwand des Führungsrohres.

Die Erfindung ist anwendbar bei allen Linearstraffern, bei denen in einem hermetisch dichten Raum ein Antriebsdruck für den Kolben erzeugt wird und nach Beendigung der Antriebsbewegung des Kolbens in diesem Druckraum ein Restgasdruck abgebaut wird. Durch Abbau dieses Restgasdruckes wird vermieden, daß sich dieser additiv zum Energieverbrauch eines gegebenenfalls am Gurtaufroller vorgesehenen Kraftbegrenzers auswirkt. Ferner wird durch Abbau dieses Restgasdruckes gewährleistet, daß bei einer eventuellen zu späten Zündung des Treibgases im Druckraum ein zu hoher Druck entsteht, der zum Bersten des Strafferantriebs führen kann. Außerdem ist gewährleistet, daß nach dem Strafferantrieb die Hauptblockierklinke der Gurtspulenblockierung in die Blockierverzahnung der Gurtspule sicher zum Eingriff kommt.

Die Wandschwachstelle der Seitenwand des Kolben kann in einfacher Weise als Scheibe ausgebildet sein, die in ein Durchgangsloch der Seitenwand dicht eingesetzt wird. Das Durchgangsloch der Kolbenseitenwand kann bei der Kolbenherstellung als Druckgußteil gebildet werden. Das Durchgangsloch kann gestuft oder durchgehend ausgebildet sein. Gleichzeitig mit dem Durchgangsloch kann in die Seitenwand des Kolbens ein Gaskanal eingeformt werden, welcher den Druckausgleich nach außen hin gewährleistet.

Die Scheibe kann als Scherblech ausgebildet sein, welches durch eine beim Überdruck entstehende Scherwirkung aus ihrem Sitz entfernt wird. Hierdurch wird erreicht, daß bei einem Druckanstieg über einen bestimmten Wert, beispielsweise etwa 250 bar, die Scheibe ausgestanzt wird und den Druckraum für den Druckausgleich öffnet.

Die Scheibe kann mit einer Pressbuchse einstückig ausgebildet sein, die mit Presssitz in das Durchgangsloch der Seitenwand eingesetzt wird. Gegebenenfalls kann die Scheibe mit einer umlaufenden Schwachstelle versehen sein, durch welche das Ausstanzen und Freigeben bei einem bestimmten Druck gesteuert einstellbar ist. Diese Einstellbarkeit des Druckausgleichs bei einem bestimmten vorgebbaren Druck kann jedoch auch durch entsprechende Wahl des Durchmessers und/oder der Scheibendicke erreicht werden. In bevorzugter Weise besteht die Scheibe und/oder die Preßbuchse aus Aluminium. Preßbuchse und Scheibe können aus einem Stück, insbesondere einem Aluminiumfließpreßteil gebildet sein. Die umlaufende Schwachstelle in der Scheibe kann dabei beispielsweise in Form einer Ringkerbnut gebildet werden. Im eingebauten Zustand befindet sich diese Schwachstelle im Druckraum.

### [Beispiele]

Anhand der Figuren wird an einem Ausführungsbeispiel die Erfindung noch näher erläutert.

Es zeigt
- Fig. 1: einen mit einem Linearstrafferantrieb versehenen Gurtaufroller, bei welchem die Erfindung zum Einsatz kommt;
- Fig. 2: ein Ausführungsbeispiel für einen Kolben des Strafferantriebs der Fig. 1;
- Fig. 3: ein Ausführungsbeispiel für eine Wandschwachstelle des in Fig. 2 dargestellten Kolbens; und
- Fig. 4: ein Ausführungsbeispiel für eine Preßbuchse, die für die Wandschwachstelle des Kolbens verwendet wird.

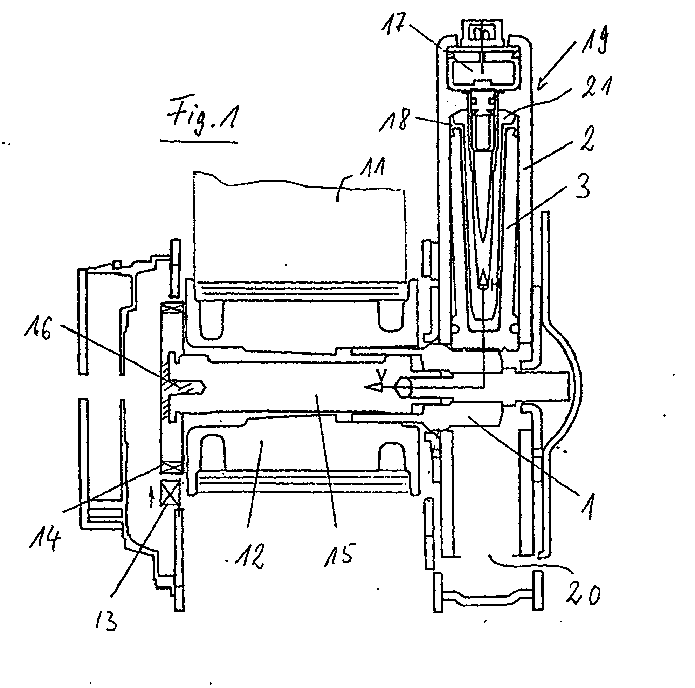

Die Fig. 1 zeigt einen Gurtaufroller mit einer Gurtspule 12, die drehbar gelagert ist. Auf der Gurtspule 12 kann ein Sicherheitsgurt 11 auf- und abgewickelt werden. Seitlich am Rahmen des Gurtaufrollers ist ein Gurtstraffer 19 vorgesehen. Dieser besitzt ein Führungsrohr 2, in welchem ein Kolben 3 angetrieben werden kann. Im Führungsrohr 2 befindet sich eine Treibgasquelle 17, welche z.B. elektrisch gezündet werden kann. Beim Zünden der Treibgasquelle 17 wird der Kolben 3 in der Fig. 1 aus der oberen Stellung nach unten im Führungsrohr 2 bewegt. In bekannter Weise wird diese Bewegung über eine am Kolben 3 vorgesehene Zahnstange auf ein Ritzel 1 übertragen. Das Ritzel 1 kann gegebenenfalls über eine Kupplung, wenn sich das Ritzel 1 im Normalbetrieb bereits in Eingriff mit der Zahnstange des Kolbens 3 befindet, auf die Gurtspule 12 übertragen werden. Hierdurch wird der Sicherheitsgurt 11 zum Straffen auf die Gurtspule 12 aufgewickelt.

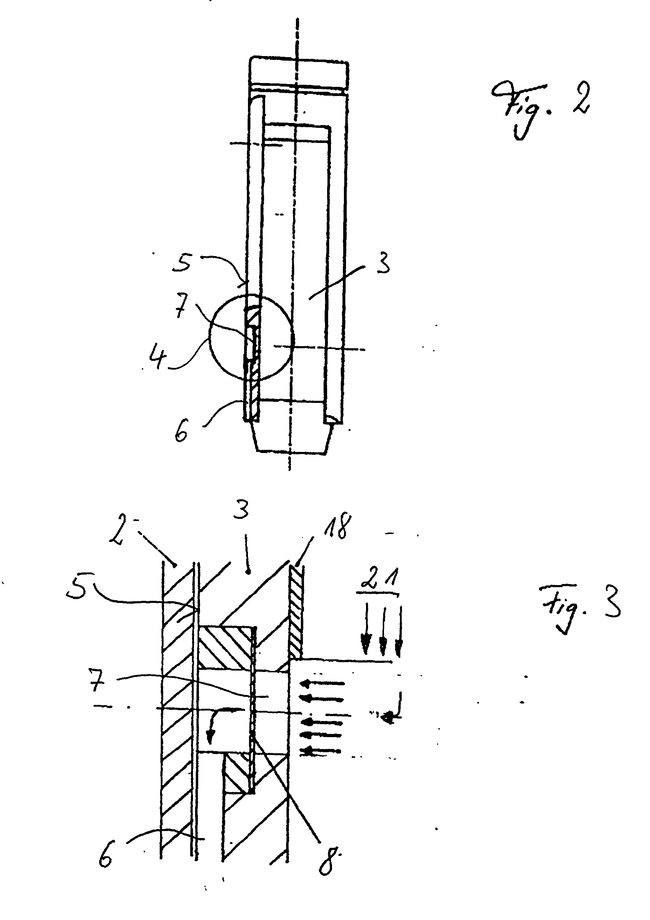

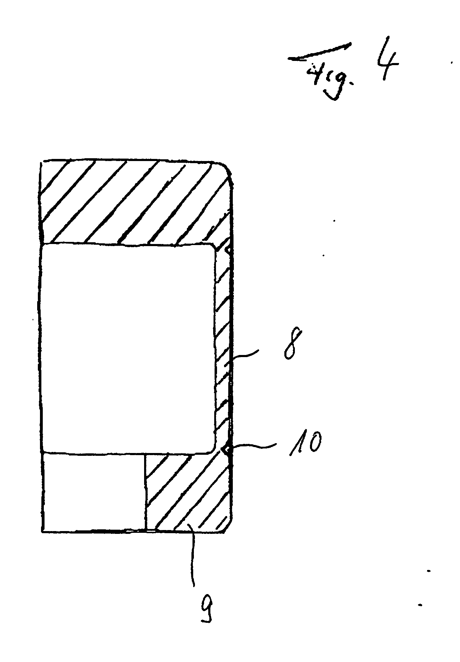

Beim Straffen des Sicherheitsgurtes wird in einem Druckraum 21, der sich auch in das Innere des Kolbens 3 erstreckt, ein Arbeitsdruck durch das von der Treibgasquelle 17 abgegebene Arbeitsgas erzeugt. Der Kolben 3 wird dabei in eine untere Position in Richtung zu einer stirnseitigen Öffnung 20 im Führungsrohr 2 bewegt. Um einen nach dem Straffvorgang im Druckraum 21 vorhandenen Überdruck abzubauen, besitzt der Kolben 3 in wenigstens einer Seitenwand 5 eine Wandschwachstelle 4 (Fig. 2). Die Wandschwachstelle, welche in der Fig. 3 in vergrößertem Maßstab dargestellt ist, wird gebildet von einer Scheibe 8, die dicht in ein Durchgangsloch 7 in der Seitenwand 5 des Kolbens 3 eingesetzt ist. Das Durchgangsloch 7 erstreckt sich im wesentlichen senkrecht zur Seitenwand 5 und zu einem in die Seitenwand 5 eingeformten Gaskanal 6. Der Gaskanal 6 erstreckt sich ausgehend vom Durchgangsloch 7 nach unten in Richtung zu einer Öffnung 20 im Führungsrohr 2.

Die Scheibe 8 kann mit Hilfe einer Restbuchse 9 dicht in das Durchgangsloch 7 eingesetzt sein. Beim dargestellten Ausführungsbeispiel ist das Durchgangsloch 7 gestuft ausgebildet und bildet eine Auflageschulter für die Scheibe 8. Die Scheibe 8 und die Preßbuchse 9 können einstückig ausgebildet sein (Fig. 4). Die Scheibe 8 und/oder die Preßbuchse 9 können als Fließpreßteil, insbesondere aus Aluminium gefertigt sein.

Die Scheibe 8 kann in der im Druckraum 21 liegenden Oberfläche eine umlaufende Schwachstelle 10 aufweisen, welche als ringförmige Kerbnut ausgebildet sein kann. Bei einem Druckanstieg über einen bestimmten Druckwert im Druckraum 21 wird auf die Scheibe 8 eine Scherwirkung ausgeübt, durch die die Scheibe 8 im Bereich der umlaufenden Schwachstelle 10 (Ringkerbnut 10) ausgestanzt wird. Diese Schwachstelle 10 entspricht in ihrem Verlauf dem Verlauf des Innenrandes des Durchgangsloches 7. Durch Ausstanzen der Scheibe 8 wird der Druckraum 21 zum Kanal 6 hin geöffnet. Es kann dann durch die freigelegte Öffnung im Durchgangsloch 7 das Gas aus dem Druckraum 21 in den Gaskanal 6 und von dort durch die Öffnung 20 im Führungsrohr 2 nach außen strömen.

Die Dicke und/oder der Innendurchmesser des Durchgangsloches 7 können so bemessen sein, daß der Druckausgleich bei Überschreiten eines bestimmten vorgegebenen Druckes im Druckraum 21 erfolgt. Hierdurch erreicht man für verschiedene Fahrzeugtypen eine variable Anpassung der maximal erlaubten Druckwerte im Druckraum 21. Die Scheibe 8 und/oder die Preßbuchse 5 können aus Aluminium bestehen. Beispielsweise kann die Scheibe 8, welche einen Scherboden bildet, eine Dicke von 0,4 mm aufweisen.

Durch den Preßsitz der Preßbuchse 9 wird eine ausreichende Abdichtung der Scheibe 8 im Durchgangsloch 7 erreicht. Falls sich die Verpressung lockert, verschiebt sich die Preßbuchse 9 in axialer Richtung des Durchgangsloches 7 und kommt in Anlage mit der Innenwand des Führungsrohres 2. Der dichte Einbau der Scheibe 8 bleibt dabei gewährleistet.

In der Fig. 3 ist mit nach unten gerichteten Pfeilen die Flammrichtung des aus der Treibgasquelle 17 freigelegten pyrotechnischen Treibgases verdeutlicht. Der Druckabbau im Druckraum 21 erfolgt durch das Durchgangsloch 7 in senkrechter Richtung dazu. Das ausströmende Gas wird dann ein zweites Mal im rechten Winkel in den Gaskanal 6 umgelenkt. In der Fig. 3 ist dies durch Pfeile verdeutlicht. Selbst wenn durch das seitwärts ausströmende Gas ein Flammdurchgang durch das Durchgangsloch 7 erfolgt, trifft dieser senkrecht auf die Innenwand des Führungsrohres 2. Hierdurch wird ein Flammdurchgang nach außen verhindert. Es entstehen allenfalls lediglich Schmauchspuren an der Innenwand des Führungsrohres 2.

Da die Preßbuchse 9 in versenkter Anordnung in der Seitenwand 5 des Kolbens 3 angeordnet ist, wird die Kolbenbewegung nicht beeinträchtigt. Bei der Herstellung des Kolbens 3, beispielsweise durch Druckguß, kann der in axialer Richtung sich erstreckende Gaskanal 6 an der Außenseite des Kolbens eingeformt werden. Durch diesen Ausgangskanal wird eine Gasströmungsrichtung beim Druckabbau erzielt, der zum Druckraum 21 im Kolbeninnern bezogen auf die Bewegungsrichtung des Kolbens 3 seitlich versetzt verläuft. Hieraus resultiert auch der Vorteil, daß ein Flammendurchgang nach außen vermieden wird.

Durch den erzielten Druckausgleich wird ein Bersten des Antriebssystems des Gurtstraffers 19 vermieden. Da der Druckausgleich im Druckraum 21 innerhalb eines bestimmten Zeitraumes erfolgt, verbleibt genügend Zeit, daß eine Blockierklinke 13 in eine Blockierverzahnung 14 der Gurtspule 12 eingreift. Durch entsprechende Dimensionierung der Scheibe 8 des Durchgangsloches 7 und des Gaskanales 6 kann dieser Zeitraum erreicht werden. Für den Fall, daß der Gurtaufroller einen Kraftbegrenzer 15, beispielsweise in Form eines Torsionsstabes aufweist, der über ein Festlager 16 mit dem blockierten Teil der Gurtspule verbunden ist, erreicht man eine einwandfreie Funktion des Kraftbegrenzers. Falls der Restdruck im Druckraum 21 nach dem Straffen so niedrig ist, daß er unterhalb der Öffnungsschwelle für den Druckausgleich liegt, beeinflußt dieser Restdruck die Wirkungsweise des Kraftbegrenzers 15 nicht. Andererseites gewährleistet dieser Restdruck einen sicheren Blockiereingriff der Klinke 13 in die Blockierverzahnung 14. Es wird die erforderliche Rückhaltewirkung, gegebenenfalls mit der Funktion des Kraftbegrenzers 15 gewährleistet.

### [Bezugszeichenliste]

- 1: Ritzel
- 2: Führungsrohr
- 3: Kolben
- 4: Wandschwachstelle
- 5: Seitenwand
- 6: Gaskanal
- 7: Durchgangsloch
- 8: Scheibe
- 9: Preßbuchse
- 10: umlaufende Schwachstelle (Ringkerbnut)
- 11: Sicherheitsgurt
- 12: Gurtspule
- 13: Blockierklinke
- 14: Blockierverzahnung
- 15: Kraftbegrenzer
- 16: Festlager
- 17: Treibgasquelle
- 18: Dichtung
- 19: Gurtstraffer
- 20: Öffnung
- 21: Druckraum

## Patentansprüche

1. Vorrichtung zum Straffen eines auf eine Gurtspule aufwickelbaren Sicherheitsgurtes mit einem in einem Führungsrohr (2) linear antreibbaren Kolben, dessen Antriebsbewegung zum Straffen des Sicherheitsgurtes in eine Drehung der Gurtspule (12) umgesetzt wird, wobei im Kolbeninnern ein Arbeitsdruck für den Kolbenantrieb herrscht, am Kolben (3) eine bei Überdruck geöffnete Schwachstelle für einen Druckausgleich vorgesehen ist, die Schwachstelle in einer entlang dem Führungsrohr (2) bewegbaren Seitenwand (5) des Kolbens (3) als Wandschwachstelle (4) ausgebildet ist und zwischen dem Führungsrohr (2) und der Seitenwand (5) des Kolbens (3) ein nach außen geführter Gaskanal (6) gebildet ist, in welchem die Wandschwachstelle (4) liegt,
wobei die Wandschwachstelle (4) von einer in einem Durchgangsloch (7) der Seitenwand (5) dicht eingesetzten Scheibe (8) gebildet ist.

2. Vorrichtung nach Anspruch 1, **dadurch gekennzeichnet, daß** die Gasströmungsrichtung im Gaskanal (6) zum Druckraum (21) im Kolbeninnern bezogen auf die Bewegungsrichtung des Kolbens (3) seitlich versetzt ist.

3. Vorrichtung nach Anspruch 1 oder 2, **dadurch gekennzeichnet, daß** die die Wandschwachstelle (4) bildende Scheibe (8) mittels einer Preßbuchse (9) mit Preßsitz dicht in die das Durchgangsloch (7) aufweisende Seitenwand (5) einsetzbar ist.

4. Vorrichtung nach Anspruch 3, **dadurch gekennzeichnet, daß** die Scheibe (8) einstückig mit der Preßbuchse (9) ausgebildet ist.

5. Vorrichtung nach einem der Ansprüche 1 bis 4, **dadurch gekennzeichnet, daß** die Scheibe (8) durch bei Überdruck entstehender Scherwirkung aus ihrem Sitz entfernbar ist.

6. Vorrichtung nach einem der Ansprüche 1 bis 4, **dadurch gekennzeichnet, daß** die Scheibe (8) eine umlaufende Schwachstelle (10) aufweist.

7. Vorrichtung nach Anspruch 6, **dadurch gekennzeichnet, daß** die Schwachstelle (10) als Kerbnut ausgebildet ist.

8. Vorrichtung nach einem der Ansprüche 1 bis 7, **dadurch gekennzeichnet, daß** die Preßbuchse (9) und/oder die Scheibe (8) als Fließpreßteil ausgebildet ist bzw. sind.

9. Vorrichtung nach Anspruch 8, **dadurch gekennzeichnet, daß** das Fließpreßteil aus Aluminium besteht.

10. Vorrichtung nach einem der Ansprüche 1 bis 9, **dadurch gekennzeichnet, daß** das Durchgangsloch (7) im wesentlichen senkrecht zum Gaskanal (6) verläuft.

11. Vorrichtung nach einem der Ansprüche 1 bis 10, **dadurch gekennzeichnet, daß** der Gaskanal (6) sich im wesentlichen in axialer Richtung erstreckt.

12. Vorrichtung nach einem der Ansprüche 1 bis 11, **dadurch gekennzeichnet, daß** der Gaskanal (6) in die Seitenwand (5) des Kolbens (3) eingeformt ist.

## Claims

1. A device for tensioning a seat belt capable of being wound onto a retractor and having a piston which can be driven linearly in a guide tube (2) and whereof the driving movement for tensioning the seat belt is converted into a rotation of the retractor (12), an operating pressure for driving the piston prevailing in the piston interior, a weak point for equalising pressure, which opens in the event of excess pressure, being provided on the piston (3), the weak point being constructed in a side wall (5) of the piston (3) which is movable along the guide tube (2) as a wall-based weak point (4), and there being formed between the guide tube (2) and the side wall (5) of the piston (3) an outwardly guided gas duct (6) in which the wall-based weak point (4) is located, with the wall-based weak point (4) being formed by a plate (8) which is inserted in sealed manner in a through aperture (7) in the side wall (5).

2. A device according to Claim 1, **characterised in that** the direction of gas flow in the gas duct (6) is laterally offset from the pressurised space (21) in the piston interior in relation to the direction of movement of the piston (3).

3. A device according to Claim 1 or 2, **characterised in that** the plate (8) forming the wall-based weak point (4) may be inserted in sealed manner into the side wall (5) having the through aperture (7) with press fit by means of a press stud (9).

4. A device according to Claim 3, **characterised in that** the plate (8) is constructed in one piece with the press stud (9).

5. A device according to one of Claims 1 to 4, **characterised in that** the plate (8) may be removed from its seating by a shearing action arising on excess pressure.

6. A device according to one of Claims 1 to 4, **characterised in that** the plate (8) has a peripheral weak point (10).

7. A device according to Claim 6, **characterised in that** the weak point (10) is constructed as a V-shaped groove.

8. A device according to one of Claims 1 to 7, **characterised in that** the press stud (9) and/or the plate (8) is or are constructed as a flow-moulded part.

9. A device according to Claim 8, **characterised in that** the flow-moulded part is made from aluminium.

10. A device according to one of Claims 1 to 9, **characterised in that** the through aperture (7) runs substantially perpendicular to the gas duct (6).

11. A device according to one of Claims 1 to 10, **characterised in that** the gas duct (6) extends substantially in the axial direction.

12. A device according to one of Claims 1 to 11, **characterised in that** the gas duct (6) is formed within the side wall (5) of the piston (3).

## Revendications

1. Dispositif de tension d'une ceinture de sécurité pouvant être enroulée sur une bobine de la ceinture, comportant un piston à entraînement linéaire dans un tube de guidage (2), dont le mouvement d'entraînement en vue de la tension de la ceinture de sécurité est converti en une rotation de la bobine de la ceinture (12), une pression de travail étant établie à l'intérieur du piston en vue de l'entraînement du piston, le piston (3) comportant un point de faiblesse ouvert en présence d'une surpression, pour assurer une compensation de la pression, le point de faiblesse ayant la forme d'un point de faiblesse de paroi (4) dans une paroi latérale (5) du piston (3) pouvant être déplacée le long du tube de guidage (2), un canal d'écoulement de gaz (6) orienté vers l'extérieur, dans lequel est agencé le point de faiblesse de paroi (4), étant agencé entre le tube de guidage (2) et la paroi latérale (5), le point de faiblesse de paroi (4) étant formé par un disque (8) inséré de manière étanche dans le trou de passage (7) de la paroi latérale (5).

2. Dispositif selon la revendication 1, **caractérisé en ce que** le sens d'écoulement du gaz dans le canal d'écoulement du gaz (6) est décalé latéralement vers la chambre de pression (21) à l'intérieur du piston, par rapport au sens de déplacement du piston (3).

3. Dispositif selon les revendications 1 ou 2, **caractérisé en ce que** le disque (8) constituant le point de faiblesse de la paroi (4) peut être inséré par l'intermédiaire d'une douille de serrage (9), par ajustement serré et de manière étanche dans la paroi latérale (5) comportant le trou de passage (7).

4. Dispositif selon la revendication 3, **caractérisé en ce que** le disque (8) est formé d'une seule pièce avec la douille de serrage (9).

5. Dispositif selon l'une des revendications 1 à 4, **caractérisé en ce que** le disque (8) peut être retiré de son ajustement par suite d'un effet de cisaillement produit en présence d'une pression excessive.

6. Dispositif selon l'une des revendications 1 à 4, **caractérisé en ce que** le disque (8) comporte un point de faiblesse périphérique (10).

7. Dispositif selon la revendication 6, **caractérisé en ce que** le point de faiblesse (10) a la forme d'une rainure entaillée.

8. Dispositif selon l'une des revendications 1 à 7, **caractérisé en ce que** la douille de serrage (9) et/ou le disque (8) ont la forme d'une pièce extrudée.

9. Dispositif selon la revendication 8, **caractérisé en ce que** la pièce extrudée est composée d'aluminium.

10. Dispositif selon l'une des revendications 1 à 9, **caractérisé en ce que** le trou de passage (7) s'étend pour l'essentiel de manière perpendiculaire au canal d'écoulement du gaz (6).

11. Dispositif selon l'une des revendications 1 à 10, **caractérisé en ce que** le canal d'écoulement de gaz (6) s'étend pour l'essentiel dans la direction axiale.

12. Dispositif selon l'une des revendications 1 à 11, **caractérisé en ce que** le canal d'écoulement de gaz (6) est formé dans la paroi latérale (5) du piston (3).
